(19) Europäisches Patentamt / European Patent Office / Office européen des brevets

(11) **EP 2 015 284 A1**

(12) **EUROPEAN PATENT APPLICATION**

(43) Date of publication:
**14.01.2009 Bulletin 2009/03**

(51) Int Cl.:
***G09G 3/34*** *(2006.01)*

(21) Application number: **08153754.0**

(22) Date of filing: **31.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **12.07.2007 US 777123**

(71) Applicant: **QUALCOMM MEMS Technologies, Inc.**
**San Diego, CA 92121 (US)**

(72) Inventors:
• **Nachman, Ramez**
  **Santa Clara, CA 95051 (US)**
• **Chui, Clarence**
  **San Jose, CA 95134 (US)**
• **Kothari, Manish**
  **Cupertino, CA 95014 (US)**

(74) Representative: **Witte, Weller & Partner**
**Postfach 10 54 62**
**70047 Stuttgart (DE)**

(54) **Mechanical relaxation tracking and responding in MEMS driver**

(57) The invention comprises systems and methods for adjusting a driving voltage based on relaxation information of a movable reflective layer of an interferometric modulator. In one example, a device for driving a MEMS device having a movable reflective layer comprises a sensing unit configured to generate information related to one or more of time, environmental exposure, and frame rate of a movable reflective layer of at least one MEMS device, and a driver circuit configured to apply voltages to drive said at least one MEMS device, said voltages being based at least in part on said information.

FIG. 13

**Description**

Background

Field of the Invention

The field of the invention relates to microelectromechanical systems (MEMS).

Description of the Related Technology

Microelectromechanical systems (MEMS) include micro mechanical elements, actuators, and electronics. Micromechanical elements may be created using deposition, etching, and or other micromachining processes that etch away parts of substrates and/or deposited material layers or that add layers to form electrical and electromechanical devices. One type of MEMS device is called an interferometric modulator. An interferometric modulator may comprise a pair of conductive plates, one or both of which may be transparent and/or reflective in whole or part and capable of relative motion upon application of an appropriate electrical signal. One plate may comprise a stationary layer deposited on a substrate, the other plate may comprise a metallic membrane separated from the stationary layer by an air gap. Such devices have a wide range of applications, and it would be beneficial in the art to utilize and/or modify the characteristics of these types of devices so that their features can be exploited in improving existing products and creating new products that have not yet been developed.

Summary of Certain Embodiments

The system, method, and devices of the invention each have several aspects, no single one of which is solely responsible for its desirable attributes. Without limiting the scope of this invention, its more prominent features will now be discussed briefly. After considering this discussion, and particularly after reading the section entitled "Detailed Description of Certain Embodiments" one will understand how the features of this invention provide advantages over other display devices.

In one embodiment, a device for driving a MEMS device in a display, and having a movable reflective layer, includes a sensing unit configured to generate information related to one or more of time, environmental exposure, and frame rate of a movable reflective layer of at least one MEMS device, and a driver circuit configured to apply voltages to drive said at least one MEMS device, said voltages being based at least in part on said information. The information related to frame rate can include frame count data, and the information related to operation time can include mechanical duty cycle data. The sensing unit can include a timing device for providing time information. The sensing unit can include a temperature sensor, where the information related to environmental exposure includes temperature information. The mechanical duty cycle data can be based on a mechanical duty cycle of about 50%, 90%, or 95% or higher, or be based on a mechanical duty cycle of about 50%, 10% or 5% or lower. The sensing unit can also include a frame counter.

In another embodiment, a method of controlling a driving voltage of a MEMS device having a movable reflective layer includes generating information related to one or more of time, environmental exposure, and frame rate of a movable reflective layer of a MEMS device, and driving said MEMS device with a voltage based at least in part on said generated information. The method can include operating said MEMS device for a predetermined period of time with at least one predetermined conditioning parameter to accelerate mechanical relaxation of said movable reflective layer relative to normal. The at least one predetermined conditioning parameter can comprise, for example, a mechanical duty cycle of about 50% or higher, a temperature of about 70° F or higher, a refresh frequency of about 15Hz or higher, a refresh frequency of about 30 Hz or higher, and/or a conditioning period of about twelve hours or longer. In other embodiments, the at least one predetermined conditioning parameter comprises a mechanical duty cycle of about 90% (or higher) or of about 97% (or higher), and/or the conditioning period can be about twenty-four hours, or longer.

In another embodiment, a control device for driving at least one MEMS device in a display, said at least one MEMS device having a movable reflective layer, includes means for generating information related to one or more of time, environmental exposure, and frame rate of a movable reflective layer of a MEMS device, and means for driving said MEMS device by providing voltages based at least in part on said information. The generating means can include a sensing unit configured to generate information related to one or more of operation time, environmental exposure, and frame rate of a movable reflective layer of a MEMS device. The driving means can include a driver circuit configured to apply voltages to drive said MEMS device, said voltages being based at least in part on said information.

In another embodiment, a method of manufacturing a device controlling a driving voltage of an MEMS device having a movable reflective layer includes disposing a MEMS device having a movable reflective membrane on a substrate, connecting a driver circuit configured to apply voltages to drive said MEMS device as a function of said information, and connecting a sensing unit to said driver circuit, said sensing unit configured to generate information related to one or more of operation time, environmental exposure, and frame rate of a movable reflective layer of a MEMS device. In another embodiment, a microelectromechanical (MEMS) device is fabricated by this method of manufacturing.

In another embodiment, a control device for driving a MEMS device in a display, the MEMS device having a movable reflective layer, includes a sensing unit configured to generate information related to one or more of time, environmental exposure, and frame rate of a movable reflective layer of a MEMS device, and a driver circuit configured to apply voltages to drive said MEMS device based at least in part on said information.

In another embodiment, a method of driving a MEMS device includes reducing bias voltage according to a predefined time schedule based on a predicted relaxation of a movable reflective layer of the MEMS device. In one example of this method, reducing the bias voltage is performed is a step-wise manner.

BRIEF DESCRIPTION OF THE DRAWINGS

FIG. 1 is an isometric view depicting a portion of one embodiment of an interferometric modulator display in which a movable reflective layer of a first interferometric modulator is in a relaxed position and a movable reflective layer of a second interferometric modulator is in an actuated position.

FIG. 2 is a system block diagram illustrating one embodiment of an electronic device incorporating a 3x3 interferometric modulator display.

FIG. 3 is a diagram of movable mirror position versus applied voltage for one exemplary embodiment of an interferometric modulator of FIG. 1.

FIG. 4 is an illustration of a set of row and column voltages that may be used to drive an interferometric modulator display.

FIGS. 5A and 5B illustrate one exemplary timing diagram for row and column signals that may be used to write a frame of display data to the 3x3 interferometric modulator display of FIG. 2.

FIGS. 6A and 6B are system block diagrams illustrating an embodiment of a visual display device comprising a plurality of interferometric modulators.

FIG. 7A is a cross section of the device of FIG. 1.

FIG. 7B is a cross section of an alternative embodiment of an interferometric modulator.

FIG. 7C is a cross section of another alternative embodiment of an interferometric modulator.

FIG 7D is a cross section of yet another alternative embodiment of an interferometric modulator.

FIG. 7E is a cross section of an additional alternative embodiment of an interferometric modulator.

FIG. 8 is a graph illustrating the relationship between time and driving voltages and illustrating panel window drift.

FIG. 9 is a graph illustrating the relationship of change in actuation voltage as a function of hours of use at different temperatures.

FIG. 10 is a block diagram of a device for adjusting drive voltage.

FIG. 11 is a graph illustrating the relationship of bias voltage ($V_b$) correction as a function of time for an embodiment where the $V_b$ correction is defined by a best case (BC) model and a worst case (WC) model.

FIG. 12 is a graph illustrating the affect of conditioning on $V_b$ correction curves.

FIG. 13 is a block diagram of another embodiment of a device for adjusting drive voltage.

FIG. 14 is a flowchart illustrating a process of driving a MEMS device.

Detailed Description of Certain Embodiments

The following detailed description is directed to certain specific embodiments of the invention. However, the invention can be embodied in a multitude of different ways. In this description, reference is made to the drawings wherein like parts are designated with like numerals throughout. As will be apparent from the following description, the embodiments may be implemented in any device that is configured to display an image, whether in motion (e.g., video) or stationary (e.g., still image), and whether textual or pictorial. More particularly, it is contemplated that the embodiments may be implemented in or associated with a variety of electronic devices such as, but not limited to, mobile telephones, wireless devices, personal data assistants (PDAs), hand-held or portable computers, GPS receivers/navigators, cameras, MP3 players, camcorders, game consoles, wrist watches, clocks, calculators, television monitors, flat panel displays, computer monitors, auto displays (e.g., odometer display, etc.), cockpit controls and/or displays, display of camera views (e.g., display of a rear view camera in a vehicle), electronic photographs, electronic billboards or signs, projectors, architectural structures, packaging, and aesthetic structures (e.g., display of images on a piece of jewelry). MEMS devices of similar structure to those described herein can also be used in non-display applications such as in electronic switching devices.

An interferometric modulator includes a movable reflective layer (or membrane) that is driven by an applied voltage to move between two (or more) positions within a cavity to modulate light, e.g., an actuated position near a partially reflective surface, and a released position away from the partially reflective surface. The movable reflective layer is fabricated from a conductive material which is typically metal. During normal use as a light modulator, repetitive movement/flexing causes the movable reflective layer to mechanically relax. Temperature variations can also affect mechanical relaxation of the movable reflective layer. As a result of mechanical relaxation, the voltages required to actuate ($V_{act}$) and release ($V_{rel}$) the movable reflective layer, and to bias it in a desired position ($V_b$) can change over its operable life. Mechanical relaxation can also affect the size of the airgap (the distance between the movable reflective layer and the partially reflective layer when released) such that the airgap becomes smaller, which correspondingly changes its light modulation properties.

To overcome the effects of mechanical relaxation, different driving voltages may be required over the lifetime of the interferometric modulator for consistent light modulation performance. Certain embodiments of the invention change a driving voltage (e.g., the bias voltage) to account for mechanical relaxation based on at least one factor that affects the mechanical relaxation of the movable reflective layer as a function of time over its operable life. In some embodiments, factors that cause mechanical relaxation are modeled as a function of time, and a driving voltage is adjusted based on the model. Such factors can include mechanical duty cycle (e.g., a relative measure of how often the movable reflective layer is in the actuated position), the accumulated number of actuation and release cycles (e.g., actuated-released-actuated) of the interferometric modulator, and temperature. In some embodiments one or more of mechanical duty cycle, temperature, number of frames displayed, or time is used to adjust the driving voltage. The mechanical relaxation information can be determined from measurements for that particular interferometric modulator or be based on predetermined information (e.g., previously made measurements or testing). The "time" can be a time measurement that is used to determine the current lifetime use of the interferometric modulator. In some embodiments, the interferometric modulator is conditioned so that the movable reflective layer achieves a certain level of mechanical relaxation. Conditioning can be performed prior to incorporating the interferometric modulator(s) into a display device, either before or after dicing the wafer upon which the interferometric modulators are fabricated. For some implementations, the interferometric modulators are conditioned in the display device. In some embodiments, conditioning can comprise operating the interferometric modulator at a predetermined refresh frequency (e.g., 30 Hz.) for a predetermined number of hours to accelerate the mechanical relaxation of the movable layer that would ordinarily take place over a much longer time period under "normal" operating conditions. Conditioning can also include operating the interferometric modulator at certain temperature (e.g., an abnormally high temperature), driving actuation using a higher than normal operating voltage, and controlling the actuation state so that the movable reflective layer is actuated, and thus "flexed" for a high percentage of the operating time (e.g., more than 90%). After conditioning, subsequent changes of mechanical relaxation are significantly smaller and voltage adjustments to account for further mechanical relaxation are also smaller, and can be less frequent.

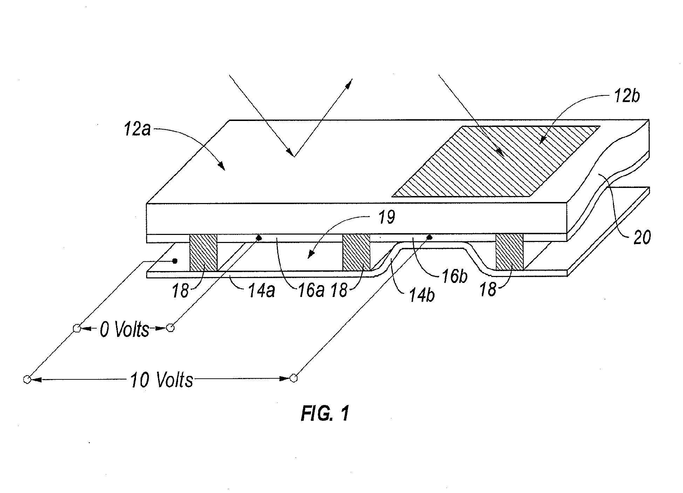

One interferometric modulator display embodiment comprising an interferometric MEMS display element is illustrated in FIG. 1. In these devices, the pixels are in either a bright or dark state. In the bright ("on" or "open") state, the display element reflects a large portion of incident visible light to a user. When in the dark ("off" or "closed") state, the display element reflects little incident visible light to the user. Depending on the embodiment, the light reflectance properties of the "on" and "off" states may be reversed. MEMS pixels can be configured to reflect predominantly at selected colors, allowing for a color display in addition to black and white.

Figure 1 is an isometric view depicting two adjacent pixels in a series of pixels of a visual display, wherein each pixel comprises a MEMS interferometric modulator. In some embodiments, an interferometric modulator display comprises a row/column array of these interferometric modulators. Each interferometric modulator includes a pair of reflective layers positioned at a variable and controllable distance from each other to form a resonant optical cavity with at least one variable dimension. In one embodiment, one of the reflective layers may be moved between two positions. In the first position, referred to herein as the relaxed position, the movable reflective layer is positioned at a relatively large distance from a fixed partially reflective layer. In the second position, referred to herein as the actuated position, the movable reflective layer is positioned more closely adjacent to the partially reflective layer. Incident light that reflects from the two layers interferes constructively or destructively depending on the position of the movable reflective layer, producing either an overall reflective or non-reflective state for each pixel.

The depicted portion of the pixel array in FIG. 1 includes two adjacent interferometric modulators 12a and 12b. In the interferometric modulator 12a on the left, a movable reflective layer 14a is illustrated in a relaxed position at a predetermined distance from an optical stack 16a, which includes a partially reflective layer. In the interferometric modulator 12b on the right, the movable reflective layer 14b is illustrated in an actuated position adjacent to the optical stack 16b.

The optical stacks 16a and 16b (collectively referred to as optical stack 16), as referenced herein, typically comprise of several fused layers, which can include an electrode layer, such as indium tin oxide (ITO), a partially reflective layer, such as chromium, and a transparent dielectric. The optical stack 16 is thus electrically conductive, partially transparent and partially reflective, and may be fabricated, for example, by depositing one or more of the above layers onto a transparent substrate 20. The partially reflective layer can be formed from a variety of materials that are partially reflective such as various metals, semiconductors, and dielectrics. The partially reflective layer can be formed of one or more layers of materials, and each of the layers can be formed of a single material or a combination of materials.

In some embodiments, the layers of the optical stack are patterned into parallel strips, and may form row electrodes in a display device as described further below. The movable reflective layers 14a, 14b may be formed as a series of parallel strips of a deposited metal layer or layers (orthogonal to the row electrodes of 16a, 16b) deposited on top of posts 18 and an intervening sacrificial material deposited between the posts 18. When the sacrificial material is etched away, the movable reflective layers 14a, 14b are separated from the optical stacks 16a, 16b by a defined gap 19. A highly conductive and reflective material such as aluminum may be used for the reflective layers 14, and these strips may form column electrodes in a display device.

With no applied voltage, the cavity 19 remains between the movable reflective layer 14a and optical stack 16a, with the movable reflective layer 14a in a mechanically relaxed state, as illustrated by the pixel 12a in FIG. 1. However, when a potential difference is applied to a selected row and column, the capacitor formed at the intersection of the row and column electrodes at the corresponding pixel becomes charged, and electrostatic forces pull the electrodes together. If the voltage is high enough, the movable reflective layer 14 is deformed and is forced against the optical stack 16. A dielectric layer (not illustrated in this Figure) within the optical stack 16 may prevent shorting and control the separation distance between layers 14 and 16, as illustrated by pixel 12b on the right in FIG. 1. The behavior is the same regardless of the polarity of the applied potential difference. In this way, row/column actuation that can control the reflective vs. non-reflective pixel states is analogous in many ways to that used in conventional LCD and other display technologies.

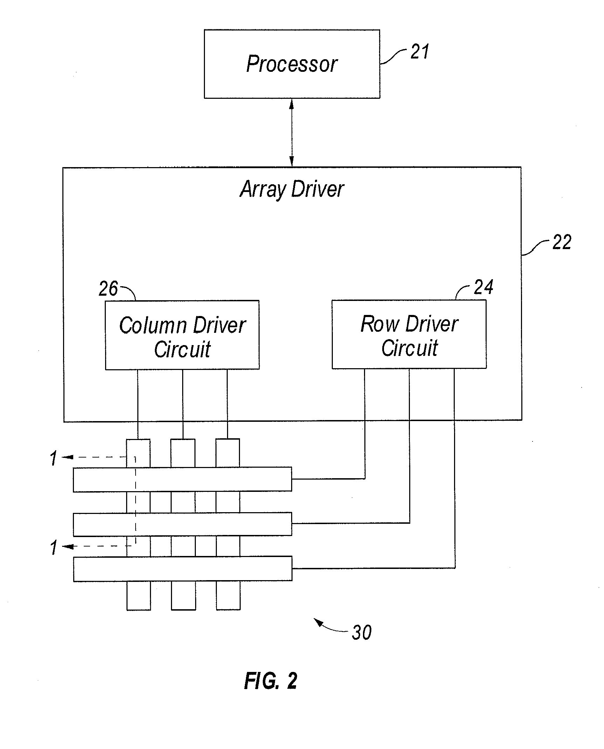

Figures 2 through 5B illustrate one exemplary process and system for using an array of interferometric modulators in a display application.

Figure 2 is a system block diagram illustrating one embodiment of an electronic device that may incorporate aspects of the invention. In the exemplary embodiment, the electronic device includes a processor 21 which may be any general purpose single- or multi-chip microprocessor such as an ARM, Pentium®, Pentium II®, Pentium III®, Pentium IV®, Pentium® Pro, an 8051, a MIPS®, a Power PC®, an ALPHA®, or any special purpose microprocessor such as a digital signal processor, microcontroller, or a programmable gate array. As is conventional in the art, the processor 21 may be configured to execute one or more software modules. In addition to executing an operating system, the processor may be configured to execute one or more software applications, including a web browser, a telephone application, an email program, or any other software application.

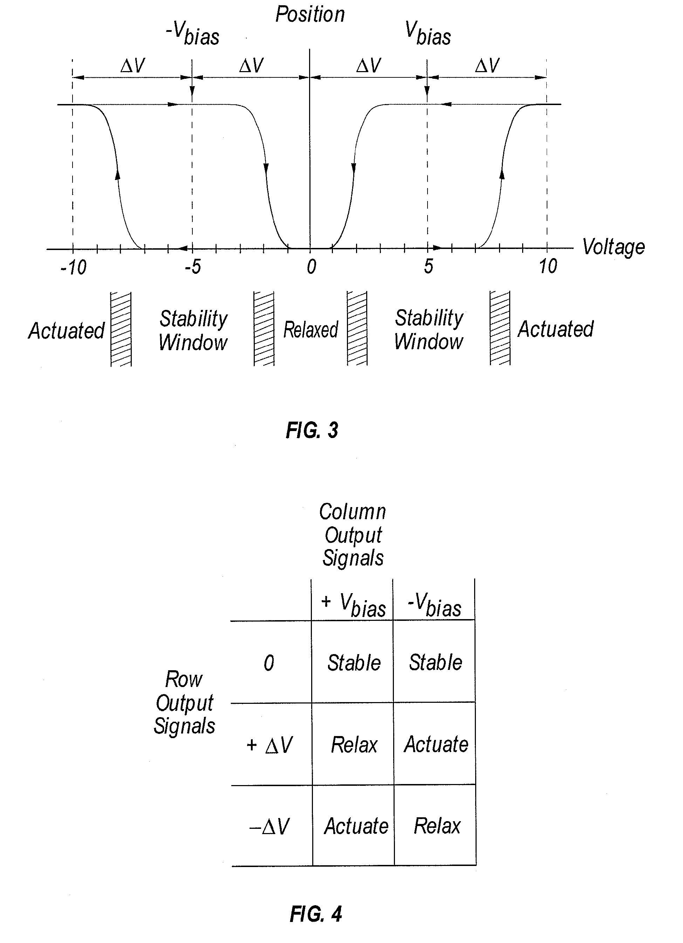

In one embodiment, the processor 21 is also configured to communicate with an array driver 22. In one embodiment, the array driver 22 includes a row driver circuit 24 and a column driver circuit 26 that provide signals to a display array or panel 30. The cross section of the array illustrated in FIG. 1 is shown by the lines 1-1 in FIG. 2. For MEMS interferometric modulators, the row/column actuation protocol may take advantage of a hysteresis property of these devices illustrated in FIG. 3. It may require, for example, a 10 volt potential difference to cause a movable layer to deform from the relaxed state to the actuated state. However, when the voltage is reduced from that value, the movable layer maintains its state as the voltage drops back below 10 volts. In the exemplary embodiment of FIG. 3, the movable layer does not relax completely until the voltage drops below 2 volts. There is thus a range of voltage, about 3 to 7 V in the example illustrated in FIG. 3, where there exists a window of applied voltage within which the device is stable in either the relaxed or actuated state. This is referred to herein as the "hysteresis window" or "stability window." For a display array having the hysteresis characteristics of FIG. 3, the row/column actuation protocol can be designed such that during row strobing, pixels in the strobed row that are to be actuated are exposed to a voltage difference of about 10 volts, and pixels that are to be relaxed are exposed to a voltage difference of close to zero volts. After the strobe, the pixels are exposed to a steady state voltage difference of about 5 volts such that they remain in whatever state the row strobe put them in. After being written, each pixel sees a potential difference within the "stability window" of 3-7 volts in this example. This feature makes the pixel design illustrated in FIG. 1 stable under the same applied voltage conditions in either an actuated or relaxed pre-existing state. Since each pixel of the interferometric modulator, whether in the actuated or relaxed state, is essentially a capacitor formed by the fixed and moving reflective layers, this stable state can be held at a voltage within the hysteresis window with almost no power dissipation. Essentially no current flows into the pixel if the applied potential is fixed.

In typical applications, a display frame may be created by asserting the set of column electrodes in accordance with the desired set of actuated pixels in the first row. A row pulse is then applied to the row 1 electrode, actuating the pixels corresponding to the asserted column lines. The asserted set of column electrodes is then changed to correspond to the desired set of actuated pixels in the second row. A pulse is then applied to the row 2 electrode, actuating the appropriate pixels in row 2 in accordance with the asserted column electrodes. The row 1 pixels are unaffected by the row 2 pulse, and remain in the state they were set to during the row 1 pulse. This may be repeated for the entire series of rows in a sequential fashion to produce the frame. Generally, the frames are refreshed and/or updated with new display data by continually repeating this process at some desired number of frames per second. A wide variety of protocols for driving row and column electrodes of pixel arrays to produce display frames are also well known and may be used in conjunction with the present invention.

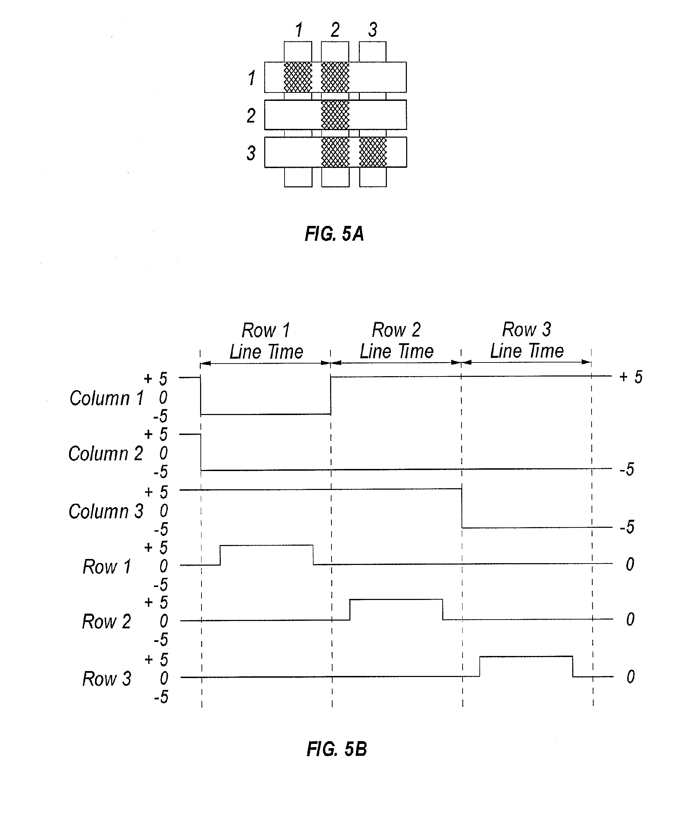

Figures 4, 5A, and 5B illustrate one possible actuation protocol for creating a display frame on the 3x3 array of FIG. 2. FIG. 4 illustrates a possible set of column and row voltage levels that may be used for pixels exhibiting the hysteresis curves of FIG. 3. In the FIG. 4 embodiment, actuating a pixel involves setting the appropriate column to $-V_{bias}$, and the appropriate row to $+\Delta V$, which may correspond to -5 volts and +5 volts respectively Relaxing the pixel is accomplished by setting the appropriate column to $+V_{bias}$, and the appropriate row to the same $+\Delta V$, producing a zero volt potential difference across the pixel. In those rows where the row voltage is held at zero volts, the pixels are stable in whatever state they were originally in, regardless of whether the column is at $+V_{bias}$, or $-V_{bias}$. As is also illustrated in FIG. 4, it will be appreciated that voltages of opposite polarity than those described above can be used, e.g., actuating a pixel can involve setting the appropriate column to $+V_{bias}$, and the appropriate row to $-\Delta V$. In this embodiment, releasing the pixel is accomplished by setting the appropriate column to $-V_{bias}$, and the appropriate row to the same $-\Delta V$, producing a zero volt potential difference across the pixel.

Figure 5B is a timing diagram showing a series of row and column signals applied to the 3x3 array of FIG. 2 which will result in the display arrangement illustrated in FIG. 5A, where actuated pixels are non-reflective. Prior to writing the frame illustrated in FIG. 5A, the pixels can be in any state, and in this example, all the rows are at 0 volts, and all the columns are at +5 volts. With these applied voltages, all pixels are stable in their existing actuated or relaxed states.

In the FIG. 5A frame, pixels (1,1), (1,2), (2,2), (3,2) and (3,3) are actuated. To accomplish this, during a "line time" for row 1, columns 1 and 2 are set to -5 volts, and column 3 is set to +5 volts. This does not change the state of any pixels, because all the pixels remain in the 3-7 volt stability window. Row 1 is then strobed with a pulse that goes from 0, up to 5 volts, and back to zero. This actuates the (1,1) and (1,2) pixels and relaxes the (1,3) pixel. No other pixels in the array are affected. To set row 2 as desired, column 2 is set to -5 volts, and columns 1 and 3 are set to +5 volts. The same strobe applied to row 2 will then actuate pixel (2,2) and relax pixels (2,1) and (2,3). Again, no other pixels of the array are affected. Row 3 is similarly set by setting columns 2 and 3 to -5 volts, and column 1 to +5 volts. The row 3 strobe sets the row 3 pixels as shown in FIG. 5A. After writing the frame, the row potentials are zero, and the column potentials can remain at either +5 or -5 volts, and the display is then stable in the arrangement of FIG. 5A. It will be appreciated that the same procedure can be employed for arrays of dozens or hundreds of rows and columns. It will also be appreciated that the timing, sequence, and levels of voltages used to perform row and column actuation can be varied widely within the general principles outlined above, and the above example is exemplary only, and any actuation voltage method can be used with the systems and methods described herein.

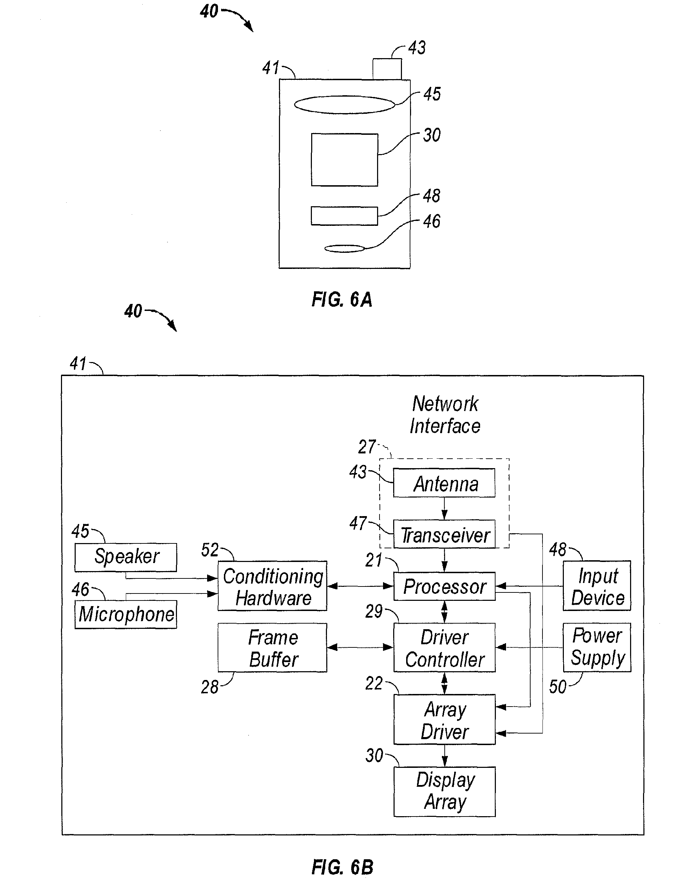

Figures 6A and 6B are system block diagrams illustrating an embodiment of a display device 40. The display device 40 can be, for example, a cellular or mobile telephone. However, the same components of display device 40 or slight variations thereof are also illustrative of various types of display devices such as televisions and portable media players.

The display device 40 includes a housing 41, a display 30, an antenna 43, a speaker 44, an input device 48, and a microphone 46. The housing 41 is generally formed from any of a variety of manufacturing processes as are well known to those of skill in the art, including injection molding, and vacuum forming. In addition, the housing 41 may be made from any of a variety of materials, including but not limited to plastic, metal, glass, rubber, and ceramic, or a combination thereof. In one embodiment the housing 41 includes removable portions (not shown) that may be interchanged with other removable portions of different color, or containing different logos, pictures, or symbols.

The display 30 of exemplary display device 40 may be any of a variety of displays, including a bi-stable display, as described herein. In other embodiments, the display 30 includes a flat-panel display, such as plasma, EL, OLED, STN LCD, or TFT LCD as described above, or a non-flat-panel display, such as a CRT or other tube device, as is well known to those of skill in the art. However, for purposes of describing the present embodiment, the display 30 includes an interferometric modulator display, as described herein.

The components of one embodiment of exemplary display device 40 are schematically illustrated in FIG. 6B. The illustrated exemplary display device 40 includes a housing 41 and can include additional components at least partially enclosed therein. For example, in one embodiment, the exemplary display device 40 includes a network interface 27 that includes an antenna 43 which is coupled to a transceiver 47. The transceiver 47 is connected to a processor 21, which is connected to conditioning hardware 52. The conditioning hardware 52 may be configured to condition a signal (e.g. filter a signal). The conditioning hardware 52 is connected to a speaker 45 and a microphone 46. The processor 21 is also connected to an input device 48 and a driver controller 29. The driver controller 29 is coupled to a frame buffer 28, and to an array driver 22, which in turn is coupled to a display array 30. A power supply 50 provides power to all components as required by the particular exemplary display device 40 design.

The network interface 27 includes the antenna 43 and the transceiver 47 so that the exemplary display device 40 can communicate with one or more devices over a network. In one embodiment the network interface 27 may also have some processing capabilities to relieve requirements of the processor 21. The antenna 43 is any antenna known to those of skill in the art for transmitting and receiving signals. In one embodiment, the antenna transmits and receives RF signals according to the IEEE 802.11 standard, including IEEE 802.11(a), (b), or (g). In another embodiment, the antenna transmits and receives RF signals according to the BLUETOOTH standard. In the case of a cellular telephone, the antenna is designed to receive CDMA, GSM, AMPS or other known signals that are used to communicate within a wireless cell phone network. The transceiver 47 pre-processes the signals received from the antenna 43 so that they may be received by and further manipulated by the processor 21. The transceiver 47 also processes signals received from the processor 21 so that they may be transmitted from the exemplary display device 40 via the antenna 43.

In an alternative embodiment, the transceiver 47 can be replaced by a receiver. In yet another alternative embodiment, network interface 27 can be replaced by an image source, which can store or generate image data to be sent to the processor 21. For example, the image source can be a digital video disc (DVD) or a hard-disc drive that contains image data, or a software module that generates image data.

Processor 21 generally controls the overall operation of the exemplary display device 40. The processor 21 receives data, such as compressed image data from the network interface 27 or an image source, and processes the data into raw image data or into a format that is readily processed into raw image data. The processor 21 then sends the processed data to the driver controller 29 or to frame buffer 28 for storage. Raw data typically refers to the information that identifies the image characteristics at each location within an image. For example, such image characteristics can include color, saturation, and gray-scale level.

In one embodiment, the processor 21 includes a microcontroller, CPU, or logic unit to control operation of the exemplary display device 40. Conditioning hardware 52 generally includes amplifiers and filters for transmitting signals to the speaker 45, and for receiving signals from the microphone 46. Conditioning hardware 52 may be discrete components within the exemplary display device 40, or may be incorporated within the processor 21 or other components.

The driver controller 29 takes the raw image data generated by the processor 21 either directly from the processor 21 or from the frame buffer 28 and reformats the raw image data appropriately for high speed transmission to the array driver 22. Specifically, the driver controller 29 reformats the raw image data into a data flow having a raster-like format, such that it has a time order suitable for scanning across the display array 30. Then the driver controller 29 sends the formatted information to the array driver 22. Although a driver controller 29, such as a LCD controller, is often associated with the system processor 21 as a stand-alone Integrated Circuit (IC), such controllers may be implemented in many ways. They may be embedded in the processor 21 as hardware, embedded in the processor 21 as software, or fully integrated in hardware with the array driver 22.

Typically, the array driver 22 receives the formatted information from the driver controller 29 and reformats the video data into a parallel set of waveforms that are applied many times per second to the hundreds and sometimes thousands of leads coming from the display's x-y matrix of pixels.

In one embodiment, the driver controller 29, array driver 22, and display array 30 are appropriate for any of the types of displays described herein. For example, in one embodiment, driver controller 29 is a conventional display controller or a bi-stable display controller (e.g., an interferometric modulator controller). In another embodiment, array driver 22 is a conventional driver or a bi-stable display driver (e.g., an interferometric modulator display). In one embodiment, a driver controller 29 is integrated with the array driver 22. Such an embodiment is common in highly integrated systems such as cellular phones, watches, and other small area displays. In yet another embodiment, display array 30 is a typical display array or a bi-stable display array (e.g., a display including an array of interferometric modulators).

The input device 48 allows a user to control the operation of the exemplary display device 40. In one embodiment, input device 48 includes a keypad, such as a QWERTY keyboard or a telephone keypad, a button, a switch, a touch-sensitive screen, a pressure- or heat-sensitive membrane. In one embodiment, the microphone 46 is an input device for the exemplary display device 40. When the microphone 46 is used to input data to the device, voice commands may be provided by a user for controlling operations of the exemplary display device 40.

Power supply 50 can include a variety of energy storage devices as are well known in the art. For example, in one embodiment, power supply 50 is a rechargeable battery, such as a nickel-cadmium battery or a lithium ion battery. In another embodiment, power supply 50 is a renewable energy source, a capacitor, or a solar cell, including a plastic solar cell, and solar-cell paint. In another embodiment, power supply 50 is configured to receive power from a wall outlet.

In some implementations control programmability resides, as described above, in a driver controller which can be located in several places in the electronic display system. In some cases control programmability resides in the array driver 22. Those of skill in the art will recognize that the above-described optimization may be implemented in any number of hardware and/or software components and in various configurations.

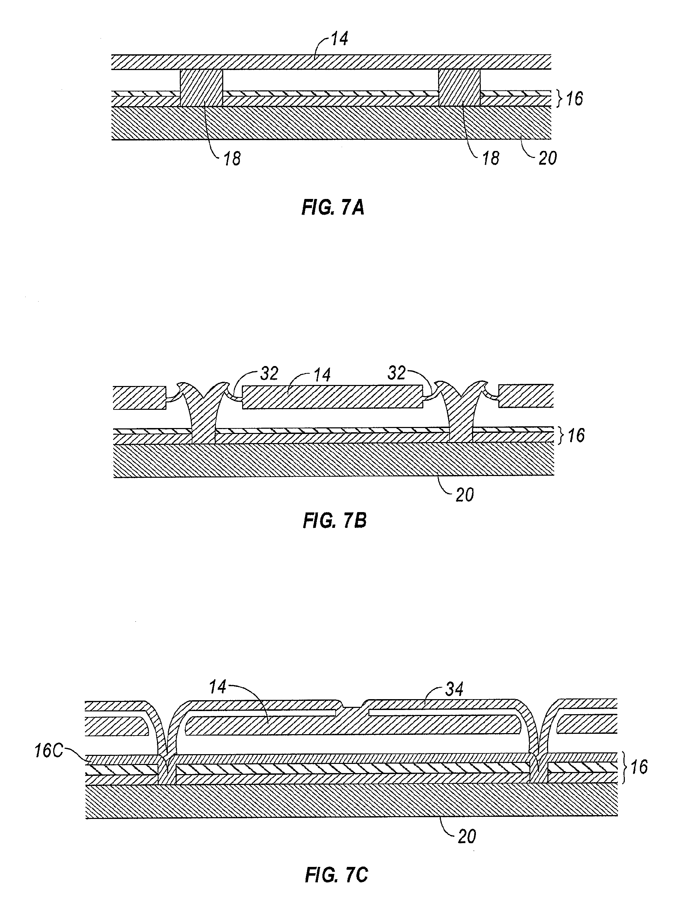

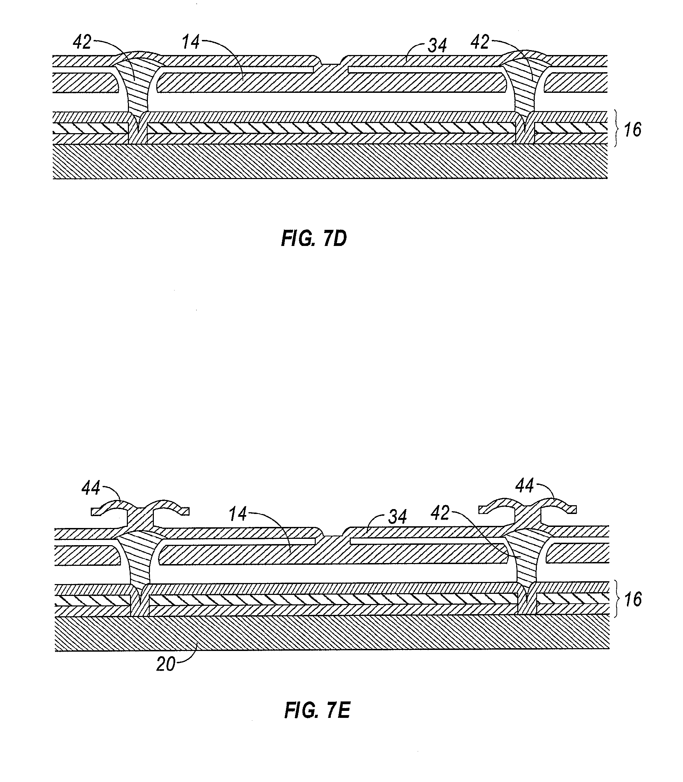

The details of the structure of interferometric modulators that operate in accordance with the principles set forth above may vary widely. For example, FIGS. 7A-7E illustrate five different embodiments of the movable reflective layer 14 and its supporting structures. FIG. 7A is a cross section of the embodiment of FIG. 1, where a strip of metal material 14 is deposited on orthogonally extending supports 18. In FIG. 7B, the moveable reflective layer 14 is attached to supports at the corners only, on tethers 32. In FIG. 7C, the moveable reflective layer 14 is suspended from a deformable layer 34, which may comprise a flexible metal. The deformable layer 34 connects, directly or indirectly, to the substrate 20 around the perimeter of the deformable layer 34. These connections are herein referred to as support posts. The embodiment illustrated in FIG. 7D has support post plugs 42 upon which the deformable layer 34 rests. The movable reflective layer 14 remains suspended over the cavity, as in FIGS. 7A-7C, but the deformable layer 34 does not form the support posts by filling holes between the deformable layer 34 and the optical stack 16. Rather, the support posts are formed of a planarization material, which is used to form support post plugs 42. The embodiment illustrated in FIG. 7E is based on the embodiment shown in FIG. 7D, but may also be adapted to work with any of the embodiments illustrated in FIGS 7A-7C as well as additional embodiments not shown. In the embodiment shown in FIG. 7E, an extra layer of metal or other conductive material has been used to form a bus structure 44. This allows signal routing along the back of the interferometric modulators, eliminating a number of electrodes that may otherwise have had to be formed on the substrate 20.

In embodiments such as those shown in FIG. 7, the interferometric modulators function as direct-view devices, in which images are viewed from the front side of the transparent substrate 20, the side opposite to that upon which the modulator is arranged. In these embodiments, the reflective layer 14 optically shields the portions of the interferometric modulator on the side of the reflective layer opposite the substrate 20, including the deformable layer 34. This allows the shielded areas to be configured and operated upon without negatively affecting the image quality. Such shielding allows the bus structure 44 in FIG. 7E, which provides the ability to separate the optical properties of the modulator from the electromechanical properties of the modulator, such as addressing and the movements that result from that addressing. This separable modulator architecture allows the structural design and materials used for the electromechanical aspects and the optical aspects of the modulator to be selected and to function independently of each other. Moreover, the embodiments shown in FIGS. 7C-7E have additional benefits deriving from the decoupling of the optical properties of the reflective layer 14 from its mechanical properties, which are carried out by the deformable layer 34. This allows the structural design and materials used for the reflective layer 14 to be optimized with respect to the optical properties, and the structural design and materials used for the deformable layer 34 to be optimized with respect to desired mechanical properties.

As described above, during normal use as a light modulator, repetitive movement/flexing can cause the movable reflective layer to mechanically relax. As a result of mechanical relaxation, the voltages required to actuate ($V_{act}$) and release ($V_{rel}$) the movable reflective layer, and to bias it in a desired position ($V_b$) can change over its operable life. There are two fundamental sources of variation of actuation and release voltages. The first is a reversible temperature effect, e.g., warmer temperature softens the mechanical layer and lowers the actuation voltage. If the temperature goes back down, this effect is reversed, and the actuation voltage rises to its previous value. The second is an irreversible aging effect, where the mechanical layer irreversibly softens over time and the actuation voltage drops even at constant temperature. The irreversible effect can be accelerated by high temperatures and heavy use, and is accordingly difficult to accurately compensate. Some schemes directly measure actuation and release voltages and set the bias voltage accordingly. This is very accurate, but is expensive in terms of extra drive circuitry and requires measurement time and power.

The irreversible component of decrease in actuation and release voltages over time can be fit to a logarithmic dependence as follows:

$$\mathrm{deltaV} = A + B*\log(t + C) \hspace{4cm} [1]$$

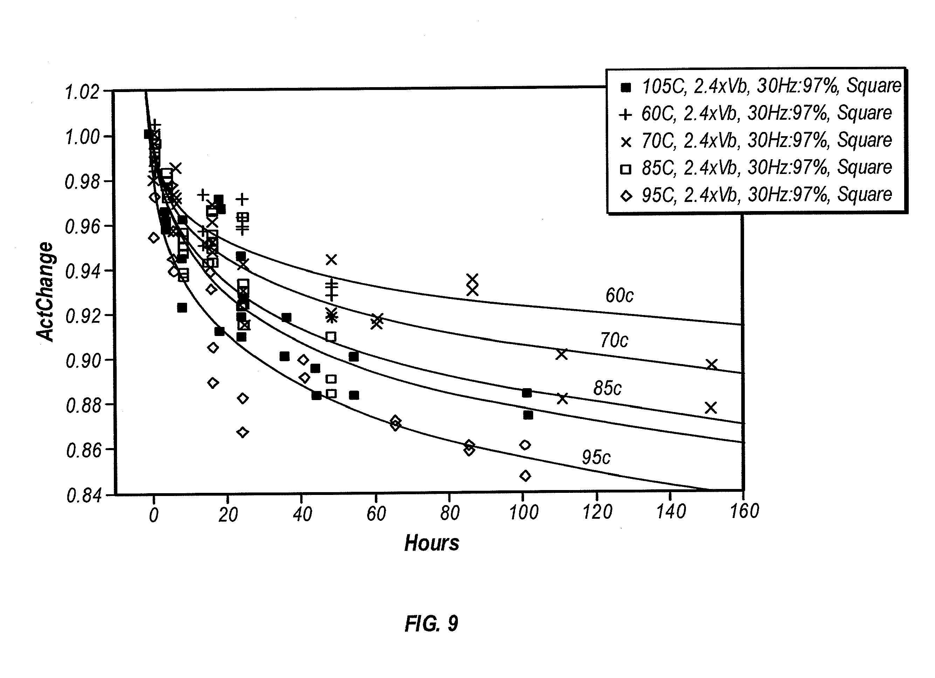

The values for B and C that fit actual observed change in actuation voltage for any given display will depend on factors such as temperature, frequency of display updates, and percentage of time a modulator spends in the actuated state vs. the released state. For example, FIG. 9 (described further below), illustrates test results of the change in actuation voltage on arrays having a 97% actuated state, updated with a refresh frequency of 30 Hz, and operated at various temperatures, as a function of time.

With knowledge of this relationship between decreasing actuation and release voltages and time, bias voltage compensation schemes can be created that do not require any measurement of array functional or environmental parameters.

Values for B and C above as a function of temperature can be determined and extrapolated to those temperatures expected to be encountered in actual use. Although the actual conditions of future use of a display may not be known, best and worst case scenarios can be used. For example, the average temperature an array is expected to be exposed to over its lifetime may vary from 50 degrees F (or lower) in a cold climate such as Wisconsin, to 90 degrees F (or higher) in a warm climate such as Arizona. In addition, an array can be updated rarely, and have pixels that are nearly always unactuated, or be updated frequently, and have pixels that are nearly always actuated. Values for B and C above can be determined or extrapolated from manufacturing test data for conditions of high average temperature and mostly actuated pixels (worst case aging) as well as for cool temperatures and mostly unactuated pixels (best case aging). This will form two aging curves as a function of time that serve to bracket the upper and lower limits of actual aging the device will experience. With "best case" and "worst case" conditions determined, a bias voltage that falls within the bracketed upper and lower limits can be applied as a function of time.

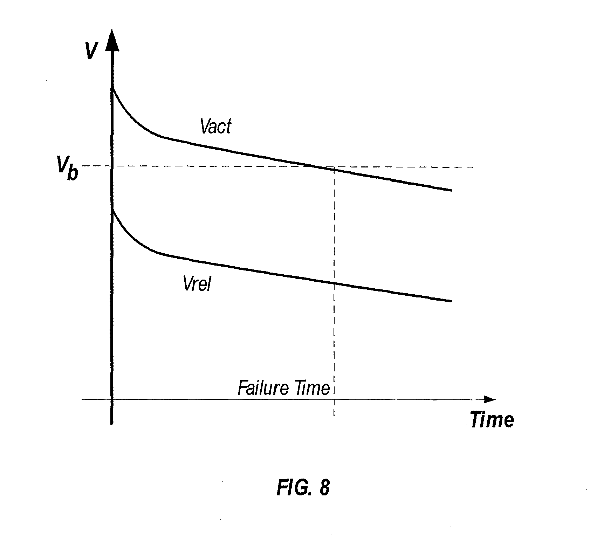

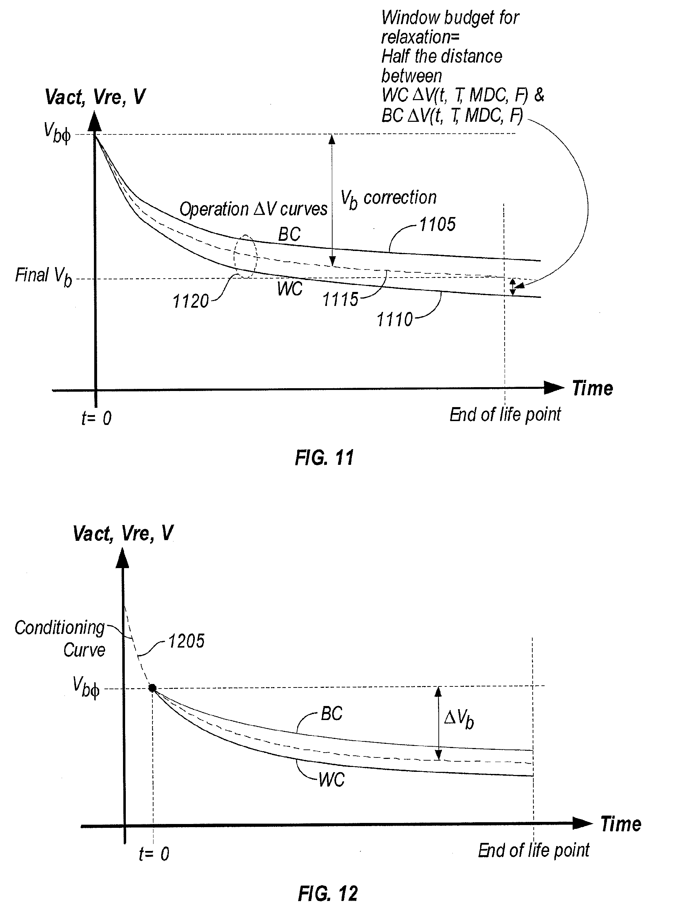

FIG. 8 illustrates the effects of mechanical relaxation on the actuation voltage ($V_{act}$) 803 and the release voltage ($V_{rel}$) 806, showing that they both decrease logarithmically as a function of time. If mechanical relaxation is not accounted for, the actuation voltage moves downward during the operational lifetime of the interferometric modulator until it is below the bias voltage $V_b$ applied to the modulators of the array between updates. This is the "failure time" at which image retention occurs causing a visual failure. Although difficult to eliminate, mechanical relaxation can be reduced through conditioning (discussed hereinbelow, and in particular in reference to FIG. 12) to a manageable level so that it only consumes a small part of the voltage "window" 809 defined by the half-width of the hysteresis loop. The remaining effects of mechanical relaxation can then be accounted for by adjusting the bias voltage based on, for example, a mechanical relaxation model.

FIG. 9 illustrates examples of an actuation voltage drop caused by mechanical relaxation that can occur in the movable layer of an interferometric modulator over a number of operable hours at five different operating temperatures. A similar voltage drop occurs in the release voltage. In FIG. 9, hours of operation of the interferometric modulator is shown on the x-axis. A representation of the change in the actuation voltage ($V_{act}$ / $V_{act0}$) (e.g., the actuation voltage needed at a particular point in the interferometric modulators operational life divided by the actuation voltage needed at time zero (0)) is shown on the y-axis.

The five curves illustrated in FIG. 9 show experimental results of the change in actuation voltage for interferometric modulators operated at different temperatures (60°C, 70°C, 85°C, 95°C, and 105°C) over about 160 hours of operation, where other operating parameters (bias voltage (2.4 V), refresh frequency (30 Hz), and mechanical duty cycle (97%)) were identical. Mechanical duty cycle relates to how often the movable reflective layer is in one particular position, e.g., the actuated position. For example, if the movable reflective layer is placed in the actuated position 60% of the time to display particular information, the mechanical duty cycle can be characterized by a value of 60%. Because actuation mechanically flexes the movable reflective layer, a higher mechanical duty cycle can increase the mechanical relaxation of the movable layer.

Specifically, the five curves in FIG. 9 illustrate the required actuation voltage ($V_{acti(t)}$ / $V_{act(0)}$) decreases with time. Temperature affects actuation voltage, as shown by the separate curve at each defined temperature. As ambient operating temperature of the interferometric modulator increases above 60°C, the actuation voltage decreases. Because the change in the rate of decrease (e.g., slope of the curve) in the actuation voltage decreases over time, the incremental change of bias voltage required to correct for mechanical relaxation also decreases over time. Accordingly, the bias voltage does not typically need to be continuously adjusted, rather, the bias voltage can be corrected at an incremental interval that may also change (e.g., increase) over time.

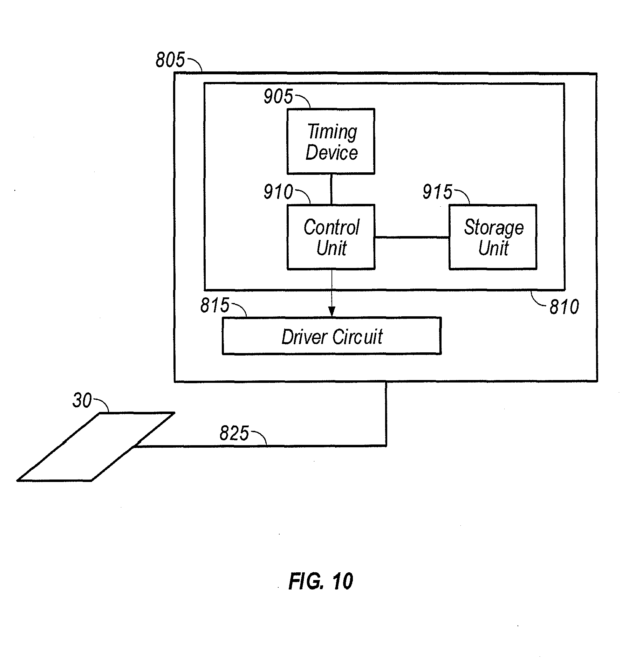

Using novel drive controllers, examples of which are described herein, the voltages applied to an interferometric modulator can be modified based on a relaxation model of the mechanical layer. FIG. 10 is a block diagram of a driving device 805 that provides a drive voltage to one or more MEMS devices. In one embodiment, the driving device 805 provides a drive voltage through a connection 825 to a plurality of interferometric modulators that are configured in a display 30. Although illustrated as a single line, connection 825 generally comprises multiple connections capable of communicating column driving signals and row driving signals from the driving device 805 to the rows and columns of the interferometric modulators of display 30. The driving device 805 includes a sensing unit 810 and a driver circuit 815. In some embodiments, the driving circuit 815 can be an electronic device as illustrated in FIG. 2 that is configured to interface with sensing unit 810. The driving device 805 provides driving voltages based on, at least in part, one or more input signals received from the sensing unit 810.

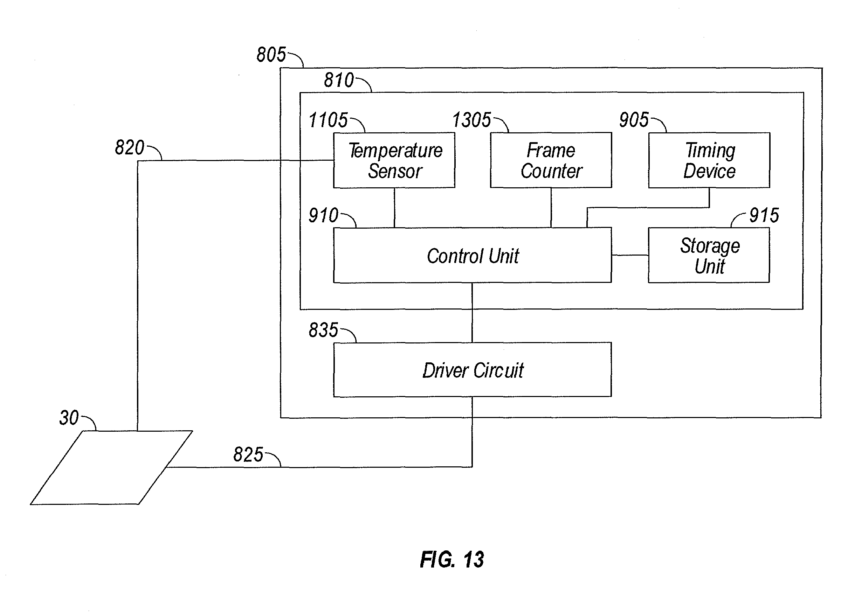

The sensing unit 810 communicates to the driver circuit 815 one or more signals that are used to determine the driving voltages supplied to interferometric modulators configured in the array 30. As indicated above, due to the mechanical relaxation that occurs to the movable reflective layer 14 (FIG. 1), the voltages required to actuate ($V_{act}$) and release ($V_{rel}$) the movable reflective layers 14, and the voltage required to maintain ($V_{bias}$) the reflective movable layers 14 in a desired position ($V_b$), can change during the operational lifetime of the interferometric modulator. Accordingly, the driving device 805 may be configured to supply different voltages over the lifetime of the interferometric modulator to achieve consistent movement of the movable reflective layer and consistent light modulation performance. Described further hereinbelow in reference to FIGS. 10 and 13, the sensing unit 810 is configured to generate and provide one or more signals representing information that can be used to account for one or more factors affecting mechanical relaxation of the movable layers of the array. The information may comprise actuation data that is associated with operating the movable reflective layers 14 of the array, for example, frame count data and/or mechanical duty cycle data. The information may also comprise information associated with operating conditions of the interferometric modulator, for example, temperature. In a typical embodiment, the total effect of one or more factors affecting mechanical relaxation is determined for the estimated operable life of a MEMS device. Corresponding voltages are determined (e.g., through testing) that account for mechanical relaxation as a function of time, and the sensing unit 810 provides signals to the driving circuit 815 indicating to use the determined voltages during appropriate times of the MEMS device operable life.

The sensing unit 810 can comprise a control unit 910 in communication with a storage unit 915 and a timing device 905. Although illustrated in FIG. 10 as separate components, in some embodiments the storage unit 915 and/or the timing device 905 can be incorporated into the control unit 910 to form a control unit also having the functionality of a timing device and a storage unit. Generally, the control unit 910 contains logic that receives an input from the timing device 905 and, using the input, determines a signal to provide to the driving circuit 815, where the signal is based on information stored in the storage unit 915.

The timing device 905 is configured to provide information that can indicate how long the connected interferometric modulator or display has been in operation. The "units" of the timing information can be, for example, seconds, minutes, hours, days, weeks, months, or years, or a relative time "count" that (at least approximately) corresponds to the number of seconds, minutes, hours, days, weeks, months or years the connected interferometric modulator or display has been operating. The timing device 905 can comprise means to track the passage of time (e.g., operable time of the array), for example, a crystal resonator, a clock oscillator, a voltage controlled oscillator (VCXO), a temperature compensated crystal oscillator (TCXO), or it can be an input signal received from another timing device.

The storage unit 915 stores information relating to mechanical relaxation of the movable reflective layers 14 as a function of time. Such information can be stored electronically in the storage unit 915 in various information structures, for example, in one or more look-up tables, indexed arrays, databases, data lists or the like. RAM memory, flash memory, ROM memory, EPROM memory, EEPROM memory, registers, or any other form of storage medium known in the art can be used to store information in the storage unit 915. In some embodiments, information related to mechanical relaxation can be stored in a portion of the memory of the control unit 915.

The mechanical relaxation information may comprise data relating to temperature, mechanical duty cycle, and/or the number of times the array has been refreshed or cycled (e.g., the frame count). For example, in some embodiments the stored relaxation information corresponds with mechanical relaxation that results from one or more of temperature, mechanical duty cycle and frame counts, as a function of time, and it is ordered so that for a given operational time value (e.g., input to a look-up table) a mechanical relaxation value can be provided. The relaxation information may be based on mechanical relaxation models that relate mechanical relaxation of the moveable layer to one or more of temperature (either an estimated temperature or a sensed temperature), mechanical duty cycle, and frame refreshes.

As one of skill in the art will appreciate, there can be numerous embodiments of schemes for adjusting the bias voltage ($V_b$) using mechanical relaxation information. Information related to one or more of operation time, environmental exposure, and frame rate of a movable reflective layer of a MEMS device can be generated and used to drive the MEMS device based at least in part on the generated information. In some embodiments, the bias voltage can be adjusted to account for predetermined estimates of mechanical relaxation as a function of time. Models based on one or more of temperature, mechanical duty cycle, and frame refresh rate can be generated and used to estimate the mechanical relaxation that will occur. Temperature, mechanical duty cycle, and frame refresh rate information can be estimated data, actual data, or a combination of estimated and actual data. In some cases, the parameters can be based on the intended use of a display that will incorporate an interferometric modulator. For example, in some models the mechanical duty cycle may be estimated to be about 50%, 90%, or 95% or higher. Alternatively, in some embodiments the mechanical duty cycle data is based on a mechanical duty cycle of about 50% or lower, or about 10% or about 5% or lower.

In some embodiments, a model is represented in data stored in the storage unit 915 (e.g., FIG. 10) in a look-up table such that for any particular time the bias voltage correction can be determined using a time value. Typically, any required bias voltage corrections are made in relatively small incremental changes at certain predetermined time periods (e.g., hours, days, weeks, months, years, etc.).

The bias voltage correction drop can be continuous or step-wise also. For example, if the midpoint of best case and worst case involves a decrease in bias voltage from 5 to 3.5 volts over a 50,000 hour device lifetime, then fifteen 0.1 volt drops could be performed over the course of 50,000 hours of use. These drops would be more frequent at the beginning, and less frequent at the end of device lifetime because the rate of mechanical relaxation slows.

The above scheme requires only a timer. Other schemes can make best case and worst case B and C values dependent on the environmental and/or use history of an individual device. For example, a current desired rate of bias voltage drop can be calculated based on how much the bias voltage has been corrected so far plus information regarding current temperature and frame update rate.

One embodiment of a model to provide bias voltage corrections as a function of time is illustrated in FIG. 11, which illustrates a graph of bias voltage (y-axis) as a function of time (x-axis). "$V_{b0}$" represents the bias voltage at time zero (0). "Final $V_b$" represents the bias voltage at the end of life point of an interferometric modulator. In FIG. 11, a bias voltage correction is estimated based on maintaining the bias voltage within a determined best case ("BC") relaxation scenario (curve 1105) and a determined worst case ("WC") relaxation scenario (curve 1110), for example, within the dashed circle 1120 along dashed curve 1115. Based on testing interferometric modulators under a variety of conditions, information relating to one or more of mechanical duty cycle, temperature, and the number of frame updates can be used to generate best case and worst case curves for particular scenarios. Once such curves are known, a bias voltage correction curve is generated that falls between the BC and WC curves. Values of the bias voltage correction curve as a function of time can be quantified, stored, and subsequently used to determine specific bias voltage corrections to be applied at certain points in time. For example, the values of the bias voltage correction curve can be stored in the storage unit 915 (FIG. 10 and 13) in a look-up table referenced by a time value, and then used by the control unit 910 to provide an input to the driver circuit 815 to control (e.g., lower) the bias voltage applied to interferometric modulators in the array 30 so that the required actuation voltage stays above the bias voltage applied to the modulators of the array between updates.

"Best case" information that is used to generate the BC curve 1105 relates to conditions that minimize mechanical relaxation, for example, low mechanical duty cycle ("MDC"), low operating temperature, and slow frame refresh rate. In this particular example, the "best case" information includes five years of real-time temperatures, 0% MDC and a zero (0) frame refresh rate. The WC curve 1110 can be generated by "worst case" information representative of conditions that generally increase mechanical relaxation, for example, a high mechanical duty cycle, high temperature, and a high frame refresh rate. In this example, the "worst case" information includes a temperature value selected to simulate five years of summer temperatures in Arizona (e.g., a temperature value equal to about 120° F) and then five years of actual temperatures (e.g., using either a temperature sensor or a predetermined average of actual temperatures). The "worst case" information can also include 100% MDC and a frame count determined from a maximum operable refresh rate over the life of the interferometric modulator. These factors are used, along with test data of the particular interferometric modulators of concern, to generate BC and WC $\Delta V$ curves 1105, 1110 showing the change in voltage as a function of time for a best case and worst case. The window budget for relaxation equals half the distance between the WC and BC curves, as illustrated by curve 1115 in FIG. 11. In this example, a driving device 805 can provide a bias voltage correction in accordance with curve 1115 to keep the bias voltage within the hysteresis window of the interferometric modulator.

There are other possible embodiments for adjusting the bias voltage using relaxation information. In another example, a model estimates the relaxation over the lifetime of the interferometric modulator for a best case having zero percent (0%) MDC and having no frame count, and a worst case one hundred percent (100%) MDC having a frame count at a 30 Hz frequency. Cumulative real-time temperatures can also be sensed and used to adjust the bias voltage. In this example, the bias voltage provided by the driving device 805 voltage can be adjusted to be between best case and worst case $\Delta V$ curves which are determined by MDC while taking into account the affect of the cumulative temperature.

"Conditioning" an interferometric modulator refers to operating the interferometric modulator under conditions designed to mechanically relax the movable reflective layer before "normal" use such that a significant amount of mechanical relaxation occurs. Typically, conditioning is performed during a time period after fabrication and before the interferometric modulator is incorporated in it destination product (e.g., a mobile telephone, wireless device, personal data assistants, hand-held or portable computers, GPS receiver, camera, MP3 player, camcorders, wrist watch, clock, calculator, flat panel display, etc.) and sold. Conditioning causes accelerated mechanical relaxation and correspondingly accelerates the $\Delta V$ change. During the conditioning period, a large portion of the mechanical relaxation has occurred. After conditioning, subsequent changes of mechanical relaxation are significantly smaller and applied voltage adjustments to account for further mechanical relaxation are also smaller. Accordingly, any further mechanical relaxation can be accounted for by adjusting (e.g., lowering) the bias voltage. In some embodiments, the destination product can include a control unit to facilitate conditioning, and conditioning can be performed on the destination product before it is put into normal operation.

The effect of conditioning is graphically illustrated in FIG. 12. At time $t_c$ an interferometric modulator begins conditioning in accordance with certain parameters. The conditioning period continues until time to. The Conditioning Curve 1205 tracks the (relatively) sharp actuation voltage drop during the conditioning period. At time to, the interferometric modulator is placed into operation, now having a slower changing actuation voltage drop due to the conditioning and requiring smaller corrections to the bias voltage ($V_b$).

High temperature, a high mechanical duty cycle, and using high actuation and release voltages all accelerate mechanical relaxation and correspondingly accelerate the release and actuation voltage changes. In some embodiments, the MEMS device (e.g., interferometric modulator) is "conditioned" using predetermined parameters so that the movable reflective layer achieves a predetermined level of mechanical relaxation. Conditioning can comprise, for example, operating the interferometric modulator at a particular refresh frequency for a certain time period in a higher than normal ambient temperature environment, and controlling the actuation state so that the movable reflective layer is actuated (or "flexed") more than half the time. In some embodiments, conditioning parameters include operating the interferometric modulator at a temperature of 70° F or higher, using a frame rate of about 15Hz or higher, and a mechanical duty cycle of about 50% or higher. In other embodiments, such conditioning parameters can include: operating the interferometric modulator at a refresh frequency of about 30 Hz or higher, operating the interferometric modulator for a period of time of about twelve (12) hours or longer, operating the interferometric modulator in a high temperature environment (e.g., above 70° F), operating the interferometric modulator using a higher than normal operating voltage, and/or controlling the interferometric modulator actuation state so that the movable reflective layer is actuated more than 90% of the time (e.g., a MDC of 90%). In some embodiments, the conditioning parameters can include operating the interferometric modulator for twenty-four (24) hours (or longer) and/or controlling the interferometric modulator actuation state so that the movable reflective layer is actuated at least 97% of the time (e.g., a MDC of at least 97%).

FIG. 13 is a block diagram of another embodiment of a driving device 805. The sensing unit 810 shown in FIG. 13 comprises a control unit 910 connected to storage unit 915 and a timing device 905. In this example, sensing unit 810 further comprises a frame counter 1305 that generates frame count data indicating how many times an interferometric modulator, or a set of interferometric modulators (e.g., display 30), has been refreshed or "cycled" from an actuated state to a relaxed state and back to an actuated state, or from a relaxed state to an actuated state and back to a relaxed state. As used herein, a "cycle" may also include moving the reflective movable layer 14 from a first position, either actuated or relaxed, to a second position opposite of the first position. Because mechanical relaxation increases as the number of refreshes increases, information of the number of cycles performed by an interferometric modulator during its lifetime (or an estimation thereof) can be used to adjust applied voltages to account for the relaxation.

When an image displayed on an array of interferometric modulators is refreshed, each reflective movable layer can be cycled regardless of the desired end position to prevent the movable reflective layers 14 layers from "sticking" due to mechanical or electrical causes. Accordingly, the entire array may be updated at a constant refresh frequency even if a portion of the display is set to the previous state after the frame refresh. As a result, an exact count of the number of refreshes that has occurred is difficult to ascertain, however, typically it is not necessary. In some embodiments, the frame count generator 1305 can be configured to determine an estimate of the frame count based on refresh frequencies used and a time measurement provided by the timing device. For example, if the display 30 is refreshed 15 times per second (e.g., 15 Hz.) for 500 hours, the frame count equals 27,000,000. The storage unit 915 can store relaxation data that is based on the frame count and accessed by a time value. In one example the frame count based relaxation data is stored in a look-up table in the storage unit 915. The sensing unit 810 can be configured to provide relaxation information to the driver circuit 815 that is based on actuation data comprising the frame count data and/or mechanical duty cycle data.

The sensing unit 810 shown in FIG. 13 also comprises a temperature sensor 1105 that provides a temperature information input to the control unit 910 to adjust a drive voltage of one or more interferometric modulators based at least in part on temperature. The temperature sensor 1105 is configured to determine temperature information either at temperature sensor 1105 itself, or at a remote location using an additional communication connection 820 to sense the temperature at, for example, at display 30. The sensing unit 810 in FIG. 13 can be configured to provide an input to the driver circuit 815 to correct the bias voltage based on information comprising the frame count data and/or mechanical duty cycle data, and/or relaxation information that comprises temperature information. Although some relaxation models use estimated temperatures (e.g., to determine best case and worst case relaxation cases), other models can use the actual sensed temperature values, or a combination of estimated and actual temperature values. For example, one embodiment uses extreme estimated temperature values for the first five years of the interferometric modulators life, then uses actual temperature values thereafter.

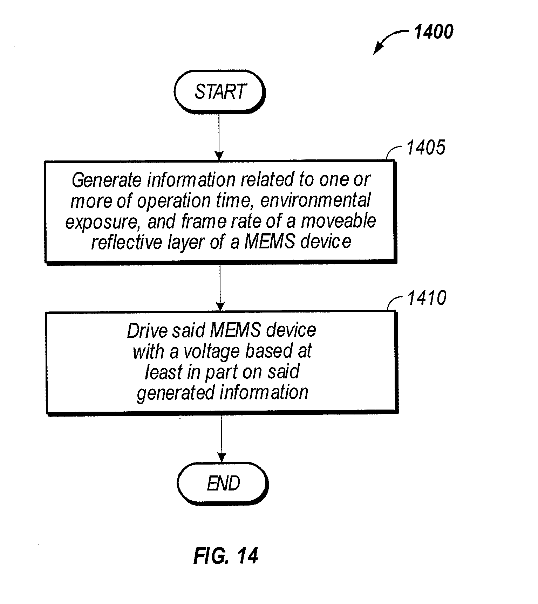

FIG. 14 is a flowchart illustrating a process 1400 of driving a MEMS device based on generated information related to the mechanical relaxation of a moveable reflective layer. In particular, at block 1405, process 1400 generates information related to one or more of operation time, environmental exposure, and frame rate of a movable reflective layer of a interferometric modulator MEMS device. Sensing unit 810 (FIGS. 10 and 13) can generate this information. The information can comprise actuation data, which can include time-related frame count data and/or mechanical duty cycle data. The information related to environmental exposure can include temperature information. In some embodiments, time-related data includes mechanical duty cycle data. At block 1410 process 1400 drives said MEMS device based at least in part on the generated relaxation information. Examples of relaxation models that can be used to drive an interferometric modulator based on relaxation information are described in reference to FIGS. 10 and 13.

In this application use of the term 'MEMS' is for convenience and continuity and in no way limits the applicability of the invention to a certain size or range, whether for a device or feature size, or manufacturing tolerance. MEMS devices include those manufactured at macro and micro levels, regardless of what size or range language is commonly used, for example: meter, centimeter, millimeter, micrometer, nanometer, picometer, etc.

In any of the processes specifically described above, one or more steps may be added, or a described step deleted, without departing from at least one of the aspects of the invention. Those of ordinary skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof. The various illustrative logical blocks, components, modules, and circuits described in connection with the examples disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g.,

a combination of a DSP and a microprocessor, a plurality of microprocessors, one or more microprocessors in conjunction with a DSP core, or any other such configuration.

Those of ordinary skill would further appreciate that the various illustrative logical blocks, modules, and algorithm steps described in connection with the examples disclosed herein may be implemented as electronic hardware, firmware, computer software, middleware, microcode, or combinations thereof. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the disclosed methods.

The steps of a method or algorithm described in connection with the examples disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an Application Specific Integrated Circuit (ASIC). The ASIC may reside in a wireless modem. In the alternative, the processor and the storage medium may reside as discrete components in the wireless modem.

Various modifications to these examples may be readily apparent to those skilled in the art, and the generic principles defined herein may be applied to other examples without departing from the spirit or scope of the novel aspects described herein. Thus, the scope of the disclosure is not intended to be limited to the examples shown herein but is to be accorded the widest scope consistent with the principles and novel features disclosed herein. Accordingly, the novel aspects described herein is to be defined solely by the scope of the following claims.

**Claims**

1. A control device for driving at least one microelectromechanical (MEMS) device in a display, said at least one MEMS device having a movable reflective layer, comprising:

   means for generating information related to frame rate of the movable reflective layer of at least one MEMS device, and for generating information related to one or more of time and environmental exposure; and
   means for driving said at least one MEMS device by providing voltages based at least in part on said information.

2. The device of claim 1, wherein said generating means comprises sensing means configured to generate information related to one or more of time, environmental exposure, and frame rate of a movable reflective layer of a MEMS device, or wherein said driving means comprises a driver circuit configured to apply voltages to drive said at least one MEMS device, said voltages being based at least in part on said information.

3. The device of claim 2, wherein said sensing means comprises a sensing unit.

4. The device of any one of claims 1-3, wherein said information related to frame rate comprises frame count data.

5. The device of claim 4, wherein said frame count data relates to the number of times the array has been refreshed or cycled.

6. The device of any one of claims 1-5, wherein said generating means comprises a timing device for providing time information.

7. The device of any one of claims 1-6, wherein said generating means further comprises a temperature sensor, and wherein said information related to environmental exposure comprises temperature information.

8. The device of any one of claims 1-7, wherein said sensing unit comprises a frame counter.

9. The device of any one of claims 1-6 and 8, wherein said information relating to environmental exposure comprises temperature information, and wherein said generating means comprises a temperature sensor.

10. The device of any one of claims 1-9, further comprising:

a display, said at least one MEMS device employed in said display;
a processor that is configured to communicate with said display, said processor being configured to process image data; and
a memory device that is configured to communicate with said processor.

11. The device of claim 10, wherein said means for driving is configured to send at least one signal to the display.

12. The device of claim 11, further comprising a controller configured to send at least a portion of the image data to said means for driving.

13. The device of claim 10, further comprising an input device configured to receive input data and to communicate said input data to said processor.

14. The device of claim 10, further comprising an image source module configured to send said image data to said processor.

15. The device of claim 14, wherein said image source module comprises at least one of a receiver, transceiver, and transmitter.

16. A method of controlling a driving voltage of a microelectromechanical system (MEMS) device having a movable reflective layer, the method comprising:

generating information related to frame rate of a the movable reflective layer of a MEMS device, and related to one or more of time and environmental exposure; and
driving said MEMS device with a voltage based at least in part on said generated information.

17. The method of claim 16, wherein generating information comprises sensing information relating to one or more of time, environmental exposure, and frame rate of a movable reflective layer of a MEMS device.

18. The method of claim 17, wherein said information relating to frame rate comprises frame count data.

19. The method of claim 17, wherein said information relating to environmental exposure comprises temperature information.

20. The method of claim 16, further comprising operating said MEMS device for a predetermined period of time with at least one predetermined conditioning parameter to accelerate mechanical relaxation of said movable reflective layer relative to normal.

21. The method of claim 20, wherein the at least one predetermined conditioning parameter comprises a mechanical duty cycle of about 50% or higher.

22. The method of claim 20, wherein the at least one predetermined conditioning parameter comprises a temperature of about 70° F or higher.

23. The method of claim 20, wherein the at least one predetermined conditioning parameter comprises a refresh frequency of about 15Hz or higher.

24. The method of claim 20, wherein the at least one predetermined conditioning parameter comprises a refresh frequency of about 30 Hz or higher.

25. The method of claim 20, wherein the at least one predetermined conditioning parameter comprises a conditioning period of about twelve hours or longer.

26. The method of claim 20, wherein the at least one predetermined conditioning parameter comprises a mechanical duty cycle of about 90% or higher.

27. The method of claim 20, wherein the at least one predetermined conditioning parameter comprises a conditioning period of about twenty-four hours or longer.

**28.** The method of claim 20, wherein the at least one predetermined conditioning parameter comprises a mechanical duty cycle of about 97% or higher.

FIG. 1

FIG. 2

Position

$-V_{bias}$         $V_{bias}$

$\Delta V$    $\Delta V$      $\Delta V$    $\Delta V$

Voltage

-10        -5         0         5         10

Actuated    Stability    Relaxed    Stability    Actuated
            Window                  Window

**FIG. 3**

Column
Output
Signals

|                        | $+ V_{bias}$ | $-V_{bias}$ |
|------------------------|--------------|-------------|
| **Row Output Signals** 0 | Stable     | Stable      |
| $+ \Delta V$           | Relax        | Actuate     |
| $-\Delta V$            | Actuate      | Relax       |

**FIG. 4**

**FIG. 5A**

**FIG. 5B**

40

41

43

45

30

48

46

**FIG. 6A**

40

41

Network
Interface

27

43 — Antenna

47 — Transceiver

45 — Speaker

52 — Conditioning
Hardware

46 — Microphone

21 — Processor

48 — Input
Device

29 — Driver
Controller

Power
Supply

Frame
Buffer

28

22 — Array
Driver

50

30 — Display
Array

**FIG. 6B**

**FIG. 7A**

**FIG. 7B**

**FIG. 7C**

FIG. 7D

FIG. 7E

**FIG. 8**

FIG. 9

**FIG. 10**

Window budget for
relaxation=
Half the distance
between
WC ΔV(t, T, MDC, F) &
BC ΔV(t, T, MDC, F)

Vact, Vre, V

$V_{b\phi}$

Operation ΔV curves

BC

$V_b$ correction

1105

Final $V_b$

1120

WC

1115

1110

Time

t= 0

End of life point

**FIG. 11**

Vact, Vre, V

Conditioning
Curve

1205

$V_{b\phi}$

BC

$\Delta V_b$

WC

Time

t= 0

End of life point

**FIG. 12**

**FIG. 13**

*1400*

START

*1405*

Generate information related to one or
more of operation time, environmental
exposure, and frame rate of a moveable
reflective layer of a MEMS device

*1410*

Drive said MEMS device
with a voltage based at
least in part on said
generated information

END

**FIG. 14**

**EP 2 015 284 A1**

EUROPEAN SEARCH REPORT

Europäisches
Patentamt
European
Patent Office
Office européen
des brevets

Application Number

EP 08 15 3754

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2006/077513 A1 (GAN FENG-YUAN [TW] ET AL) 13 April 2006 (2006-04-13) * the whole document * ----- | 1-28 | INV. G09G3/34 |
| Y | US 2003/063053 A1 (YAMAZAKI SHUNPEI [JP] ET AL) 3 April 2003 (2003-04-03) * paragraph [0045] - paragraph [0048] * * paragraph [0064] * ----- | 1-28 | |
| Y | US 2007/053652 A1 (MIGNARD MARC [US] ET AL) 8 March 2007 (2007-03-08) * figure 6b * * paragraph [0040] - paragraph [0047] * * paragraph [0050] - paragraph [0056] * ----- | 10-15 | |
| Y | EP 1 640 962 A (IDC LLC [US]) 29 March 2006 (2006-03-29) * figures 10A-10B * * paragraph [0040] - paragraph [0047] * ----- | 20-28 | |
| | | | TECHNICAL FIELDS SEARCHED (IPC) G09G G02B |

The present search report has been drawn up for all claims

| Place of search | Date of completion of the search | Examiner |
|---|---|---|
| The Hague | 4 November 2008 | Husselin, Stephane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 15 3754

This annex lists the patent family members relating to the patent documents cited in the above-mentioned European search report.
The members are as contained in the European Patent Office EDP file on
The European Patent Office is in no way liable for these particulars which are merely given for the purpose of information.

04-11-2008

| Patent document cited in search report | | Publication date | Patent family member(s) | | Publication date |
|---|---|---|---|---|---|
| US 2006077513 | A1 | 13-04-2006 | TW 259424 B | | 01-08-2006 |
| US 2003063053 | A1 | 03-04-2003 | CN 1409403 A | | 09-04-2003 |
| | | | EP 1310939 A2 | | 14-05-2003 |
| | | | KR 20030027846 A | | 07-04-2003 |
| | | | SG 120889 A1 | | 26-04-2006 |
| | | | TW 565820 B | | 11-12-2003 |
| | | | US 2007097038 A1 | | 03-05-2007 |
| US 2007053652 | A1 | 08-03-2007 | EP 1969584 A1 | | 17-09-2008 |
| | | | WO 2007081463 A1 | | 19-07-2007 |
| EP 1640962 | A | 29-03-2006 | AU 2005203233 A1 | | 13-04-2006 |
| | | | BR PI0503871 A | | 09-05-2006 |
| | | | CA 2513026 A1 | | 27-03-2006 |
| | | | JP 2006091848 A | | 06-04-2006 |
| | | | KR 20060092872 A | | 23-08-2006 |
| | | | MX PA05010245 A | | 22-05-2006 |
| | | | SG 121039 A1 | | 26-04-2006 |
| | | | US 2008158646 A1 | | 03-07-2008 |
| | | | US 2006077523 A1 | | 13-04-2006 |
| | | | US 2007201038 A1 | | 30-08-2007 |

For more details about this annex : see Official Journal of the European Patent Office, No. 12/82